# EUROPÄISCHE PATENTANMELDUNG

(11) **EP 4 286 908 A1**
(43) Veröffentlichungstag der Anmeldung: **06.12.2023**
(21) Anmeldenummer: 22176793.2
(22) Anmeldetag: 01.06.2022
(51) Int. Cl.: G02B 6/36, G02B 6/44

(54) **HALTEVORRICHTUNG ZUM HALTEN VON GLASFASERLEITUNGEN**

(71) Anmelder: Kaiser GmbH & Co. KG, 58579 Schalksmühle (DE)
(72) Erfinder: MOLODYNSKI, Damian, 58313 Herdecke (DE); SIEBEKING, Thomas, 58513 Lüdenscheid (DE)
(74) Vertreter: Rentsch Partner AG

(57) **Zusammenfassung**

Die Erfindung betrifft eine Haltevorrichtung (1) zum Halten von mindestens einer Reihe von durch die Haltevorrichtung (1) in eine erste Richtung (x) durchgeführten Glasfaserleitungen, die Haltevorrichtung (1) umfassend ein Unterteil (2) zur Befestigung der Haltevorrichtung (1) an einem Netzverteilerschrank und mindestens ein mit dem Unterteil (2) wirkverbindbares Oberteils (3). Weiterhin umfasst die Haltevorrichtung (1) mindestens eine Raststruktur (5) zur Wirkverbindung des Oberteils (3) mit dem Unterteil (2) in einer zu der ersten Richtung (x) senkrechten zweiten Richtung (z) in mehreren alternativen Positionen und mindestens zwei in der zweiten Richtung (z) zwischen dem Unterteil (2) und dem Oberteil (3) angeordnete Klemmplatten (4) aus je einem weichelastischen Material zur Einklemmung der Reihe von Glasfaserleitungen zwischen den jeweiligen Klemmplatten (4).

## Beschreibung

### GEBIET DER OFFENLEGUNG

Die vorliegende Offenlegung bezieht sich auf eine Haltevorrichtung zum Halten von Glasfaserleitungen.

### HINTERGRUND DER OFFENLEGUNG

Aus dem Stand der Technik sind Netzverteilerschränke bekannt. In diese werden in der Regel von den Anbietern kommende Glasfaserleitungen eingeführt, über Kassettensysteme abgelegt und mit abgehenden Glasfaserleitungen verbunden, die ihrerseits weiter zu den Verbrauchern geführt werden. Hierfür können die in den Netzverteilerschrank eingehenden Glasfaserleitungen gespleisst und/oder gepatcht werden bevor diese den Netzverteilerschrank wieder als ausgehende Glasfaserleitungen verlassen. Die jeweiligen Verbindungsstellen der Glasfaserleitungen, an welchen diese durch Spleissen und/oder Patchen miteinander verbunden wurden, liegen in der Regel in einer in dem Netzverteilerschrank angeordneten Spleisskassette. Bevor die Glasfaserleitungen jedoch in die entsprechenden Spleisskassetten gelangen, sollten diese mittels eine Haltevorrichtung zugentlastet werden und ggf. mittels einer Glasfasermanagementvorrichtung entsprechend der Anordnung der Spleisskassetten vorsortiert werden. Hierzu müssen diese entsprechend der für Glasfaserleitungen beschränkten Biegeradien umgelenkt werden.

Die aus dem Stand der Technik bekannten Haltevorrichtungen haben den Nachteil, dass immer nur kleine Mengen von Glasfaserleitungen durch diese durchgeführt werden können und das Halten und Verlegen von grösseren Mengen von Glasfaserleitungen schnell unübersichtlich und aufwendig wird.

Die Aufgabe der Erfindung ist es daher eine einfach zu handhabende Haltevorrichtung auch für grössere Mengen von Glasfaserleitungen bereitzustellen.

### ZUSAMMENFASSUNG DER OFFENLEGUNG

Die vorliegende Erfindung bezieht sich auf eine Haltevorrichtung zum Halten von Glasfaserleitungen. Die Haltevorrichtung dient hierbei dazu mindestens eine Reihe von durch die Haltevorrichtung in eine erste Richtung durchgeführten Glasfaserleitungen zu halten und dabei insbesondere von Zugkräften zu entlasten.

Hierzu umfasst die Haltevorrichtung ein Unterteil, mindestens ein mit dem Unterteil wirkverbindbares Oberteil sowie mindestens zwei Klemmplatten. Das Unterteil dient hierbei zur Befestigung der Haltevorrichtung z.B. an einem Netzverteilerschrank oder dergleichen. Die mindestens zwei Klemmplatten dienen zur (schonenden) Einklemmung der Reihe von Glasfaserleitungen zwischen den jeweiligen Klemmplatten. Hierzu umfassen die jeweiligen Klemmplatten in der Regel ein weichelastisches Material. Das mindestens eine Oberteil dient weiter zur Fixierung der Klemmplatten. Das mindestens eine Oberteil und das Unterteil umfassen hierzu mit Vorteil einen Hartkunststoff. Zur Wirkverbindung des mindestens einen Oberteils mit dem Unterteil in einer zu der ersten Richtung senkrechten zweiten Richtung umfasst die Haltevorrichtung weiter mindestens eine Raststruktur. Die Raststruktur(en) kann das mindestens eine Oberteil und das Unterteil hierbei in der zweiten Richtung in mehreren alternativen Positionen wirkverbinden. Die mehreren alternativen Positionen der mindestens einen Raststruktur können derart ausgelegt sein, dass mehrere in die zweite Richtung übereinander angeordnete Reihen von Glasfaserleitungen durch die Haltevorrichtung durchführbar sind, respektive angeordnet werden können. In diesem Fall kann die Haltevorrichtung also zum Halten von einer Matrix von durch die Haltevorrichtung in eine erste Richtung durchgeführten Glasfaserleitungen dienen. Die Matrix an Glasfaserleitungen umfasst dabei mehrere Reihen von Glasfaserleitungen, welche sich mit Vorzug jeweils in eine dritte Richtung erstreckten und mehrere Spalten von Glasfaserleitungen, welche sich mit Vorzug jeweils in die zweite Richtung erstrecken. Die dritte Richtung ist hierbei senkrecht zur ersten und zur zweiten Richtung. Je nach Anwendung, kann die Matrix jedoch auch eine äussere Form und entsprechende Anordnung von Reihen und Spalten wie bei einem Parallelogramm haben. Bei der Montage können also die Reihen von Glasfaserleitungen nacheinander durch die Haltevorrichtung sortiert eingebracht werden und von einer Klemmplatte sicher voneinander separiert werden, bevor eine weitere Reihe von Glasfaserleitungen eingebracht werden kann.

Mit Vorteil bildet die mindestens eine Raststruktur in dem wirkverbundenen Zustand des Unterteils und des mindestens einen Oberteils einen Hinterschnitt zwischen diesen in die zweite Richtung aus. Ferner bietet es sich an, dass die mindestens eine Raststruktur in dem wirkverbundenen Zustand jedoch in die erste Richtung hinterschnittsfrei ausgebildet ist. Auf diese Weise kann die Wirkverbindung zwischen dem mindestens einen Oberteil und dem Unterteil z.B. durch Drücken auf das Oberteil in die zweite Richtung und zum Unterteil hin und durch Verschiebung des Oberteils relativ zum Unterteil in die erste Richtung auflösbar sein.

Je nach Anwendung kann die mindestens eine Raststruktur mindestens ein erstes Rastelement am Unterteil und mindestens ein zweites Rastelement am Oberteil umfassen. Das mindestens eine erste und zweite Rastelement wirken zusammen um eine rastende Verbindung bereitzustellen. Für die mehreren alternativen Positionen ist es vorteilhaft, wenn mehrere erste Rastelemente und/oder mehrere zweite Rastelemente vorgesehen sind. Die mehreren ersten Rastelemente und/oder mehreren zweiten Rastelemente können hierbei in die zweite Richtung hintereinander angeordnet sein. Beispielsweise können am Oberteil mehrere in die zweite Richtung hintereinander angeordnete zweite Rastelemente angeordnet sein, während am Unterteil lediglich ein erstes Rastelement vorhanden ist (oder vice versa).

Je nach Ausgestaltung kann das Unterteil eine Basisplatte und mindestens zwei von der Basisplatte und zum Oberteil hin abragende sich (paarweise) gegenüberliegende Seitenteile umfassen. Die Seitenteile können also von einer Oberseite der Basisplatte abragen, welche zum Oberteil hingewandt ist. Die jeweiligen Seitenteile bilden zwischen ihnen einen Aufnahmeraum für die mindestens zwei Klemmplatten aus. Die beiden Seitenteile liegen sich also im Bezug zum Aufnahmeraum gegenüber.

Das mindestens eine erste Rastelement kann hierbei an einem der mindestens zwei Seitenteile des Unterteils angeordnet sein. Mit Vorteil sind jedoch zwei Raststrukturen vorhanden, sodass pro Seitenteil je mindestens ein erstes Rastelement vorhanden ist. Dies bewirkt eine gleichmässige Einklemmung der Glasfaserleitungen in die dritte Richtung. Mit Vorteil sind diese an einer vom Aufnahmeraum wegweisenden Aussenseite der jeweiligen Seitenteile angeordnet. Wenn wie oben beschrieben, lediglich ein erstes Rastelement pro Seitenteil des Unterteils vorhanden ist, ist dieses mit Vorteil an einem distalen Ende des entsprechenden Seitenteils angeordnet.

An einer Unterseite der Basisplatte kann sich weiter ein Wirkverbindungsmittel zur Befestigung des Unterteils befinden. Die Unterseite liegt gegenüber der Oberseite des Unterteils. Das Wirkverbindungsmittel auf der Unterseite kann z.B. eine Nut sein, welche dazu ausgelegt mit einer Hutschiene wirkverbindbar zu sein. Alternativ oder ergänzend sind jedoch auch andere Arten von Wirkverbindungsmittel, wie Rast- oder Klemmelemente, denkbar.

Je nach Ausgestaltung kann das mindestens eine Oberteil aus der ersten Richtung betrachtet (umgekehrt) U-förmig ausgestaltet sein. Zum Beispiel kann das mindestens eine Oberteil eine Abdeckplatte und zwei von der Abdeckplatte und zum Unterteil hin abragende sich gegenüberliegende Seitenteile umfassen. Das mindestens eine zweite Rastelement kann hierbei an einem der mindestens zwei Seitenteilen des Oberteils angeordnet sein. Mit Vorteil sind jedoch zwei Raststrukturen vorhanden, sodass pro Seitenteil je mindestens ein zweites Rastelement oder mehrere zweite Rastelemente vorhanden ist. Mit Vorteil sind diese (im wirkverbundenen Zustand) an einer zum Aufnahmeraum hinweisenden Innenseite der jeweiligen Seitenteile angeordnet.

Je nach Ausgestaltung können das Unterteil und/oder das mindestens eine Oberteil mindestens eine kammartige Struktur zum geordneten Durchführen der Reihe von Glasfaserleitungen, insbesondere der Matrix von Glasfaserleitungen, aufweisen. Für eine einfache Installation der Glasfaserleitungen ist jedoch eine Anordnung der kammartigen Struktur am Unterteil vorteilhaft. Die kammartige Struktur umfasst hierbei mehrere Finger, welche jeweils von Schlitzen voneinander getrennt sind. Mit Vorteil erstreckt sich die kammartige Struktur in die dritte Richtung. D.h. die Finger und die dazwischenliegenden Schlitze wechseln sich in die dritte Richtung ab. Jeder Schlitz dient hierbei zur Aufnahme mindestens einer Glasfaserleitung. Für ein gutes Fasermanagement eignet sich eine Anzahl von 5 - 8 Schlitzen pro kammartiger Struktur. Die mindestens Reihe von Glasfaserleitungen wird demnach in die erste Richtung durch die kammartige Struktur geführt, wobei je eine Glasfaserleitung in einem Schlitz der kammartigen Struktur geführt wird. Ist eine Matrix von Glasfaserleitungen vorhanden, werden pro Schlitz mehrere in die zweite Richtung übereinander angeordnete Glasfaserleitungen geführt. In anderen Worten dient je ein Schlitz der kammartigen Struktur zum Durchführen einer Spalte der Matrix von Glasfaserleitungen. Die entsprechenden mehreren Reihen von Glasfaserleitungen werden in die zweite Richtung mit Vorteil von je einer Klemmplatte voneinander separiert. Demnach kann die Haltevorrichtung mehrere (mindestens drei) Klemmplatten umfassen. Auf diese Weise sind die mehreren Reihen (mindestens zwei) von Glasfaserleitungen, welche gemeinsam die Matrix von Glasfaserleitungen ausbilden, je zwischen zwei benachbarten Klemmplatten durchführbar.

Je nach Anwendung kann die mindestens eine kammartige Struktur sich zwischen den jeweiligen Seitenteilen des Unterteils in die dritte Richtung erstrecken. Es können jedoch auch zwei kammartige Strukturen vorhanden sein. Mit Vorteil umgeben die zwei Seitenteile des Unterteils und die zwei kammartigen Strukturen den Aufnahmeraum umfangsseitig (aus der zweiten Richtung betrachtet). So wird eine parallele Anordnung der Glasfaserleitungen in die erste Richtung durch die Haltevorrichtung unterstützt.

Je nach Ausgestaltung kann die Haltevorrichtung ein Unterteil und mehrere Oberteile umfassen. Hierzu kann das Unterteil mehrere Paare von der Basisplatte abragende Seitenteile, wie oben beschrieben, umfassen. Pro Paar Seitenteile, kann ein mit diesen wirkverbindbares Oberteil vorhanden sein. Die jeweiligen Seitenteile (des Unterteils) erstrecken sich vorteilhafterweise in die erste Richtung. D.h. diese sind dann in die dritte Richtung hintereinander angeordnet. Ein Paar Seitenteile des Unterteils mit je einem Oberteil und mit den dazwischen angeordnete mindestens zwei Klemmplatten bilden je eine Klemmeinheit aus. Somit kann pro Klemmeinheit eine Matrix an Glasfaserleitungen in die erste Richtung durch die Haltevorrichtung durchgeführt werden, wobei die Matrizen in die dritte Richtung nebeneinander angeordnet sind.

Die vorliegende Erfindung bezieht sich ebenfalls auf eine Glasfasermanagementvorrichtung. Die Glasfasermanagementvorrichtung umfasst ein Gehäuse, welches einen Installationsraum zur Aufnahme und Umlenkung der Glasfaserleitungen zumindest bereichsweise umgibt. Das Gehäuse umfasst eine Bodenplatte und eine zumindest bereichsweise um die Bodenplatte umlaufende Seitenwand. Die Seitenwand erstreckt sich mit Vorteil in die zweite Richtung von einem unteren Ende zu einem oberen Ende der Seitenwand. Die Glasfasermanagementvorrichtung umfasst in der Regel mindestens einen Eingangsbereich zum Einführen von Glasfaserleitungen in den Installationsraum und mindestens einen Ausgangsbereich zum Ausführen von Glasfaserleitungen aus dem Installationsraum. In Bezug zum Installationsraum gegenüberliegend von der Bodenplatte kann die Glasfasermanagementvorrichtung optional eine Abdeckung umfassen, welche den Installationsraum des Gehäuses zumindest bereichsweise abdeckt.

Weiterhin umfasst die Glasfasermanagementvorrichtung mindestens einen Umlenkkörper zum bereichsweise Umwinden und somit Umlenken von Glasfaserleitungen. Mit Vorteil ist der Umlenkkörper zumindest bereichsweise zylinderförmig. Dieser kann einen Durchmesser von 40mm - 60mm aufweisen, sodass ein möglichst kickfreies Umlenken der Glasfaserleitungen ermöglicht wird, respektive ein minimaler Biegeradius der Glasfaserleitungen nicht unterschritten wird. Der mindestens eine Umlenkkörper kann sich hierbei in die zweite Richtung von einem ersten Ende zu einem zweiten Ende erstrecken. Hierbei kann das erste Ende an der Bodenplatte angeformt sein. Mit Vorteil erstreckt sich der Umlenkkörper von der Bodenplatte bis zu einer Innenseite der Abdeckung. Die Innenseite der Abdeckung ist hierbei zum Installationsraum hingewandt. Der mindestens eine Umlenkkörper dient dann als Auflage für die Abdeckung in die zweite Richtung. An dem zweiten Ende des mindestens einen Umlenkkörpers können zudem mehrere Laschen seitlich (über eine Umlenkkontur des Umlenkkörpers hinaus) abragen. Die Laschen dienen dazu auf dem Umlenkkörper zumindest bereichsweise umwundene Glasfaserleitungen zu fixieren, d.h. vor dem Abrutschen vom Umlenkkörper in die zweite Richtung zu bewahren.

Je nach Anwendung kann die Glasfasermanagementvorrichtung mehrere Umlenkkörper, insbesondere einen ersten und (mindestens) einen zweiten Umlenkkörper, umfassen. Hierbei ist der erste Umlenkkörper in einem ersten Umlenkbereich und der zweite Umlenkkörper in einem zweiten Umlenkbereich des Installationsraums angeordnet. Pro Umlenkbereich ist mit Vorteil je mindestens ein Ausgangsbereich und/oder je mindestens ein Eingangsbereich vorgesehen. Glasfaserleitungen, welche durch einen Eingangsbereich in den ersten Umlenkbereich in den Installationsraum eintreten, sind so über den ersten und/oder den zweiten Umlenkkörper zu dem Ausgangsbereich des ersten oder des zweiten Umlenkbereichs führbar. Gleiches gilt für Glasfaserleitungen, welche durch den Eingangsbereich in den zweiten Umlenkbereich eintreten.

Das Gehäuse (und optional ebenfalls die Abdeckung) ist mit Vorteil in die zweite Richtung hinterschnittsfrei gestaltet. Auf diese Weise kann die Glasfasermanagementvorrichtung ein Spitzgussteil sein. Dies ermöglicht eine kostengünstige und effiziente Herstellung der Vorrichtung. Eine hinterschnittsfreie Ausgestaltung bedeutet, dass z.B. die zuvor beschriebenen Laschen aus der zweiten Richtung betrachtet innerhalb einer Kontur von entsprechenden Ausnehmungen in der Bodenplatte liegen. Für eine leichte Glasfasermanagementvorrichtung und kostengünstige Herstellung derselben bietet sich weiterhin eine dünnwandige Ausgestaltung der Glasfasermanagementvorrichtung an. Bei einer dünnwandigen Ausgestaltung kann z.B. der mindestens eine Umlenkkörper hohl ausgestaltet sein.

Je nach Ausgestaltung und Anwendung kann es vor dem mindestens einen Ausgangsbereich zu einen hohen Dichte von ausgeführten Glasfaserleitungen kommen, was zu einem Platzmangel führen kann und einem Monteur die Installation der Glasfaserleitungen erschwert. Daher kann es sich anbieten eine Höhe des Installationsraums (gemessen in die zweite Richtung) über den Installationsraum zu variieren. Zum Beispiel kann die Höhe des Installationsraums in einem Bereich vor dem Ausgangsbereich(en) vergrössert sein. D.h. es kann ein abgesenkter Bodenbereich vor den Ausgangsbereichen vorliegen. Der abgesenkte Bodenbereich kann hierbei eine grössere Höhe aufweisen als der restliche Installationsraum. Bei einer dünnwandigen Ausgestaltung bietet es sich an, die Bodenplatte zumindest bereichsweise beabstandet zum unteren Ende der Seitenwand anzuordnen. In dem abgesenkten Bodenbereich kann die Bodenplatte einen geringeren Abstand zum unteren Ende der Seitenwand aufweisen. Der Abstand kann ebenfalls bis auf Null gehen. D.h. die Bodenplatte kann im abgesenkten Bodenbereich am unteren Ende der Seitenwand enden. Je nach Ausgestaltung kann es sich anbieten den mindestens einen Ausgangsbereich an einer Ecke des Gehäuses (aus der dritten Richtung betrachtet) anzuordnen. Die Ecke mit dem entsprechenden Ausgangsbereich kann ferner gerundet sein. Die gerundete Ecke kann also den abgesenkten Bereich begrenzen und dient einer verbesserten Ankoppelbarkeit an die benachbarte(n) Spleisskassette(n).

Zur Wirkverbindung der Glasfasermanagementvorrichtung kann diese an einer Unterseite der Bodenplatte Wirkverbindungsmittel aufweisen. Mit Vorteil sind ebenfalls die Wirkverbindungsmittel in die zweite Richtung hinterschnittsfrei ausgestaltet. Die Wirkverbindungsmittel können z.B. derart ausgelegt sein, dass sich diese zum Eingreifen in eine Hutschiene eignen. Hutschienen eigen sich insbesondere zur Befestigung in einem Netzverteilerschrank. Hierzu können in der Seitenwand zwei gegenüberliegende Aussparungen, insbesondere in die erste Richtung und in Bezug zur Glasfasermanagementvorrichtung gegenüberliegende Aussparungen, für die Hutschiene vorgesehen sein. Die Aussparungen sind mit Vorzug in der zweiten Richtung zwischen der Bodenplatte und dem unteren Ende der Seitenwand angeordnet.

Die vorliegende Erfindung bezieht sich ebenfalls auf einen Einschub für einen Verteilerschrank umfassend eine Glasfasermanagementvorrichtung und eine mit dieser verbundenen Haltevorrichtung, wie zuvor beschrieben. Die Glasfasermanagementvorrichtung kann hierbei bereichsweise integral mit dem Unterteil der Haltevorrichtung verbunden sein oder über Wirkverbindungsmittel der (separat ausgestalteten) Haltervorrichtung verbindbar sein. Insbesondere kann das Gehäuse der Glasfasermanagementvorrichtung integral mit dem Unterteil der Haltevorrichtung verbunden sein, respektive angeformt sein. In diesem Fall kann eine Rückseite der Haltevorrichtung, an der die Glasfaserleitungen die Haltevorrichtung (z.B. durch eine kammartige Struktur) verlassen, einen Einführbereich für die Glasfasermanagementvorrichtung ausbilden. Bei einer Ausgestaltung mit mehreren Umlenkbereichen der Glasfasermanagementvorrichtung, umfasst die Haltevorrichtung mit Vorteil pro Umlenkbereich mindestens eine Klemmeinheit. Die jeweilige Rückseite einer der Klemmeinheit, an der die Glasfaserleitungen die Haltevorrichtung (z.B. durch eine kammartige Struktur) verlassen, bildet dann den Einführbereich für den entsprechenden Umlenkbereich aus.

Es versteht sich von selbst, dass sowohl die vorangehende allgemeine Beschreibung als auch die folgende detaillierte Beschreibung Ausführungsformen darstellen und dazu dienen, einen Überblick oder einen Rahmen für das Verständnis der Art und des Charakters der Offenlegung zu schaffen. Die beiliegenden Zeichnungen dienen dem weiteren Verständnis und sind Bestandteil dieser Beschreibung und werden in diese aufgenommen. Die Zeichnungen veranschaulichen verschiedene Ausführungsformen und dienen zusammen mit der Beschreibung dazu, die Prinzipien und die Funktionsweise der offengelegten Konzepte zu erläutern.

### KURZBESCHREIBUNG DER ZEICHNUNGEN

Die hier beschriebene Offenlegung wird aus der nachstehenden detaillierten Beschreibung und den beigefügten Zeichnungen, die nicht als Einschränkung der in den beigefügten Ansprüchen beschriebenen Offenlegung angesehen werden sollten, besser verstanden werden. Die Zeichnungen zeigen:
- Fig. 1: Eine erste Variante der Haltevorrichtung gemäss der Erfindung in einem nicht wirkverbundenen Zustand in einer perspektivischen Ansicht;
- Fig. 2: Eine zweite Variante der Haltevorrichtung gemäss der Erfindung in einem teilweise nicht wirkverbundenen Zustand in einer perspektivischen Ansicht;
- Fig. 3: Ein Einschub für einen Verteilerschrank umfassend eine Glasfasermanagementvorrichtung und eine mit dieser verbundenen Haltevorrichtung gemäss Fig. 2;
- Fig. 4: Der Einschub gemäss Fig. 3 in einer Ansicht von oben (ohne Abdeckung und Oberteile).

### BESCHREIBUNG DER AUSFÜHRUNGSFORMEN

Im Folgenden wird im Detail auf bestimmte Ausführungsformen Bezug genommen, von denen Beispiele in den beigefügten Zeichnungen dargestellt sind, in denen einige, aber nicht alle Merkmale gezeigt werden. In der Tat können die hier offengelegten Ausführungsformen in vielen verschiedenen Formen verkörpert werden und sollten nicht so ausgelegt werden, dass sie auf die hier dargelegten Ausführungsformen beschränkt sind; vielmehr werden diese Ausführungsformen bereitgestellt, damit diese Offenlegung den geltenden rechtlichen Anforderungen genügt. Wann immer möglich, werden gleiche Referenznummern verwendet, um auf gleiche Komponenten oder Teile zu verweisen. Vielmehr sind die in der Beschreibung verwendeten Wörter eher beschreibend als einschränkend, und es versteht sich, dass verschiedene Änderungen vorgenommen werden können, ohne vom Umfang der Offenlegung abzuweichen.

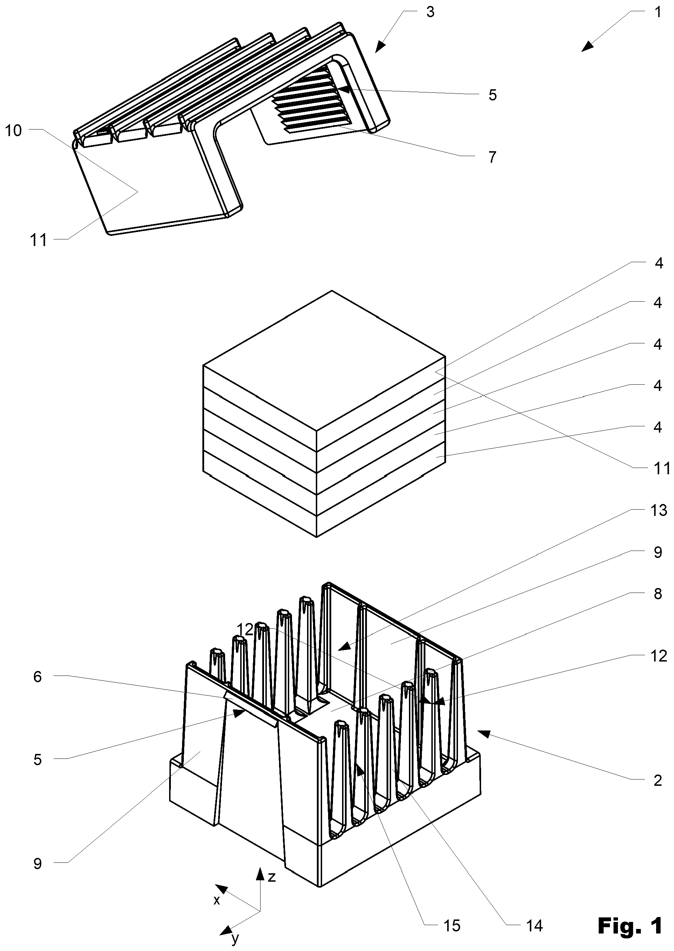

**Figur 1** zeigt eine erste Variante einer Haltevorrichtung 1 gemäss der Erfindung zum Halten von mindestens einer Reihe von durch die Haltevorrichtung 1 in eine erste Richtung (x - Richtung) durchgeführten Glasfaserleitungen. Die gezeigte Haltevorrichtung 1 umfasst ein Unterteil 2 und ein mit dem Unterteil 2 wirkverbindbares Oberteil 3, zwischen denen in eine zur ersten Richtung senkrechte zweite Richtung (z - Richtung) mehrere Klemmplatten 4 angeordnet sind. Die Klemmplatten 4 sind je aus einem weichelastischen Material und dienen zur schonenden Einklemmung der Reihe von Glasfaserleitungen zwischen den jeweiligen Klemmplatten 4. Weiterhin umfasst die Haltevorrichtung 1 mindestens eine Raststruktur 5 zur Wirkverbindung des Oberteils 3 mit dem Unterteil 2 in der zweiten Richtung in mehreren alternativen Positionen. Hierzu ist an dem Unterteil 2 mindestens ein erstes Rastelement 6 und an dem Oberteil mehrere in die zweite Richtung gestaffelte zweite Rastelemente 7 angeordnet, welche gemeinsam eine Raststruktur 5 ausbilden. Andere Ausgestaltungen und Anzahl von Rastelementen sind jedoch anlehnend an die allgemeine Beschreibung ebenfalls möglich.

Das Unterteil 2 umfasst eine Basisplatte 8 und mindestens zwei von einer Oberseite der Basisplatte 8 abragende und sich in Bezug zu einem Aufnahmeraum 13 für die Klemmplatten 4 gegenüberliegende Seitenteile 9. An jedem Seitenteil 9 ist hierbei ein erstes Rastelement 6 angeordnet. Im gezeigten Fall ist das jeweilige Rastelement 6 auf einer jeweiligen Aussenseite an einem distalen Ende der Seitenteile 9 angeordnet. Die Aussenseite ist hierbei vom Aufnahmeraum 13 abgewandt. Die Haltevorrichtung 1 kann weiter am Unterteil 2 mindestens eine kammartige Struktur 12 zum geordneten Durchführen der mindestens einen Reihe von Glasfaserleitungen aufweisen. Im vorliegenden Fall sind zwei kammartige Strukturen 12 vorhanden, welche sich zwischen den jeweiligen Seitenteilen 9 des Unterteils 2 in eine zur ersten Richtung und zur zweiten Richtung senkrechten dritten Richtung (y - Richtung) erstreckt. Der Aufnahmeraum 13 wird also aus der zweiten Richtung betrachtet von den Seitenteilen 9 und den kammartigen Strukturen 12 umgeben.

Im Gegensatz zum Unterteil 2 ist das Oberteil 3 im wirkverbundenen Zustand des Oberteils 3 mit dem Unterteil 2 aus der ersten Richtung betrachtet U-förmig. Das Oberteil 3 umfasst hierzu eine Abdeckplatte 10, welche im wirkverbundenen Zustand der Basisplatte 8 des Unterteils 2 gegenüberliegt, und ebenfalls zwei Seitenteile 11, welche von der Abdeckplatte 10 und zum Unterteil 2 hingewandt abragen. An einer Innenseite der Seitenteile 11 sind hierbei je mehrere zweite Rastelemente 7 angeordnet, welche in der zweiten Richtung voneinander beabstandet und hintereinander angeordnet sind. Die ersten Rastelemente 6 bilden hierbei mit den zweiten Rastelementen 7 je einen Hinterschnitt zwischen dem Oberteil 3 und dem Unterteil 2 in die zweite Richtung in dem wirkverbundenen Zustand des Unterteils 2 und des Oberteils 3 aus. Vorteilhafterweise sind diese jedoch gleichzeitig in die erste Richtung hinterschnittsfrei ausgebildet. Auf diese Weise ist die Wirkverbindung zwischen dem Oberteil 3 und dem Unterteil 2 durch Drücken auf das Oberteil 3 in die zweite Richtung und zum Unterteil 2 hin und durch Verschiebung des Oberteils 3 relativ zum Unterteil 2 in die erste Richtung auflösbar.

Wie ersichtlich, sind bei der Haltevorrichtung 1 gemäss der ersten Variante insgesamt fünf Klemmplatten 4 vorhanden. Jedoch ist auch eine andere Anzahl von Klemmplatten 4 möglich. Zwischen jeweils zwei benachbarter Klemmplatten 4 kann hierbei eine Reihe von durch die Haltevorrichtung 1 in die erste Richtung durchgeführter Glasfaserleitungen angeordnet, respektive eingeklemmt, werden. Mit Vorteil können die jeweiligen Glasfaserleitungen einer Reihe hierbei in der kammartigen Struktur 12 geordnet durch die Haltevorrichtung 1 geführt werden. Unter «geordnet» wird verstanden, dass je eine Glasfaserleitung der Reihe an Glasfaserleitungen in einem Schlitz 15 der kammartigen Struktur 12 aufgenommen wird. Die Schlitze 15 werden durch Finger 14 der kammartigen Struktur 12 voneinander getrennt. Werden, wie bei der ersten Variante der Haltevorrichtung 1 ebenfalls möglich, mehrere Reihen (d.h. eine Matrix) an Glasfaserleitungen durch die Haltevorrichtung geführt, können pro Schlitz 15 mehrere übereinander angeordnete Glasfaserleitungen durchgeführt werden, welche je durch eine Klemmplatte 4 voneinander beabstandet gehalten werden.

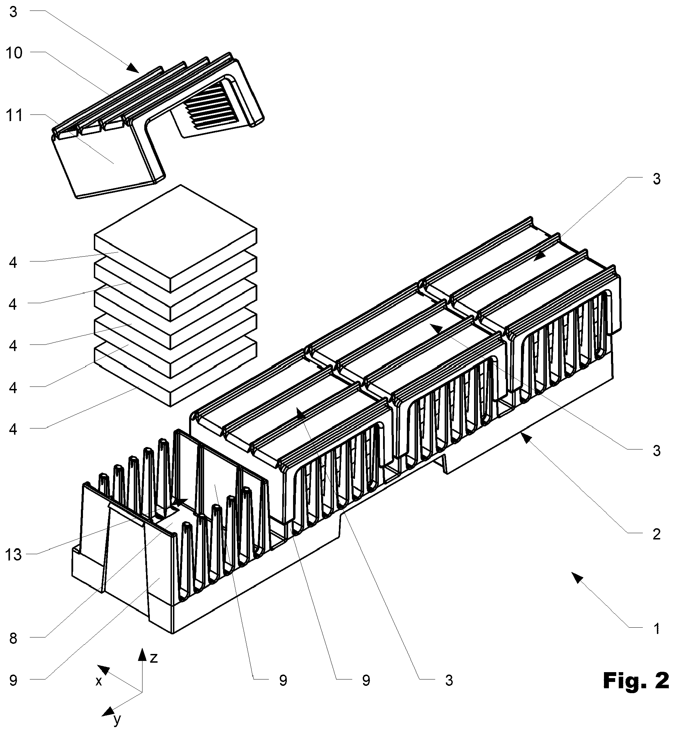

**Figur 2** zeigt eine zweite Variante einer Haltevorrichtung 1 gemäss der Erfindung. Die zweite Variante der Haltevorrichtung 1 unterscheidet sich von der ersten Variante dadurch, dass diese ein Unterteil 2 und mehrere Oberteile 3 umfasst. Hierzu umfasst das gezeigte Unterteil 2 mehrere paarweise von der Basisplatte 8 abragende Seitenteile 9, wie im Kontext der ersten Variante beschrieben. Insgesamt sind acht Seitenteile 9 vorhanden, welche sich in erste Richtung erstrecken und in die dritte Richtung hintereinander angeordnet sind.

Pro Paar Seitenteile 9 ist ein Oberteil 3 vorhanden. D.h. im vorliegenden Fall sind vier Klemmeinheiten (mit je einem Oberteil 3 und mehreren Klemmplatten 4) vorhanden. Jedoch ist auch eine andere Anzahl von Klemmeinheiten denkbar.

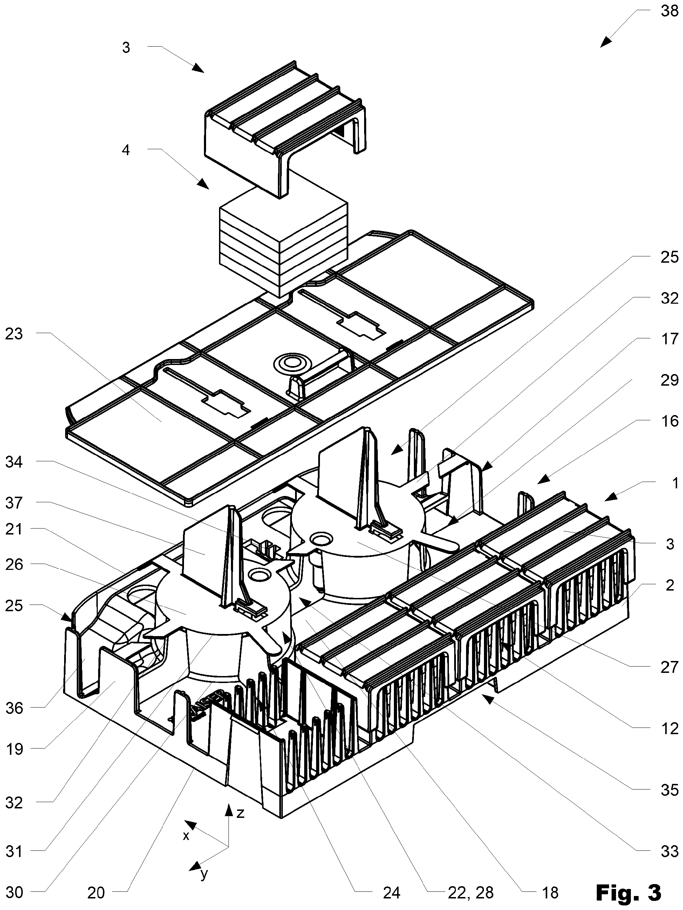

**Figur 3** zeigt die zweite Variante der Haltevorrichtung 1 gemäss Fig. 2 verbunden mit einer Glasfasermanagementvorrichtung 16. Gemeinsam bilden die Glasfasermanagementvorrichtung 16 mit der Haltevorrichtung 1 einen Einschub 38 für einen Verteilerschrank. Im vorliegenden Fall ist ein Gehäuse 17 der Glasfasermanagementvorrichtung 16 an dem Unterteil 2 der Haltevorrichtung 1 integral angeformt. Jedoch ist auch eine separate Ausgestaltung mit einer Verbindung über Wirkverbindungsmittel denkbar.

Die Glasfasermanagementvorrichtung 16 umfasst das Gehäuse 17 mit einer Bodenplatte 18 und einer zumindest bereichsweise um die Bodenplatte 18 umlaufenden Seitenwand 19, welche sich von einem unteren Ende 20 zu einem oberen Ende 21 in die zweite Richtung erstreckt. Die Bodenplatte 18 ist hierbei an der Seitenwand 19 zwischen dem unteren und dem oberen Ende 20, 21 und grösstenteils zu dem unteren Ende 20 beabstandet angeformt. Die Bodenplatte 18 und die zumindest bereichsweise umlaufende Seitenwand 19 bilden gemeinsam (auf einer Seite der Bodenplatte 18) einen Installationsraum 22 zur Aufnahme von Glasfaserleitungen aus. Eine Abdeckung 23 kann vorhanden sein um den Installationsraum abzudecken und eine Installationsöffnung (gebildet von dem oberen Ende 21 der Seitenwand 19) abzudecken. Die Glasfaserleitungen können über mehrere Eingangsbereiche 24 (rückseitige kammartige Strukturen 12 der Haltevorrichtung 1) in den Installationsraum 22 geführt werden und in dargestellten Fall über mindestens zwei Ausgangsbereiche 25 wieder aus dem Installationsraum 22 geführt werden. Vor den jeweiligen Ausgangsbereichen 25 kann je ein abgesenkter Bodenbereich 36 angeordnet sein, welcher Platz schafft um multiple Glasfaserleitungen auszuführen. Die Glasfasermanagementvorrichtung 16 umfasst weiter zwei zylinderförmige Umlenkkörper (erster und zweiter Umlenkkörper 26, 27), welche je in einem Umlenkbereich 28, 29 angeordnet sind. Eine andere Anzahl und Ausgestaltung der Umlenkkörper ist ebenfalls denkbar. Der erste und zweite Umlenkkörper 26, 27 erstreckt sich jeweils von einem ersten Ende 30 zu einem zweiten Ende 31 in die zweite Richtung. An dem ersten Ende ist der jeweilige Umlenkkörper 28, 29 an der Bodenplatte 18 angeformt. An dem zweiten Ende ragen seitlich von dem Umlenkkörpern 26, 27 mehrere Laschen 32 ab. Diese verringern das Risiko eines Abrutschens der Glasfaserleitungen von den Umlenkkörpern 26, 27. Auf dem Umlenkkörpern 26, 78 können zudem jeweils Stützen 37 für Spleisskassetten angeordnet sein, welche in der Regel gegenüberliegend der Haltevorrichtung 1 an der Glasfasermanagementvorrichtung 16 angeordnet werden. Weiterhin kann auf den jeweiligen Umlenkkörpern 26, 28 weitere Wirkverbindungsmittel 34 zur Befestigung der Abdeckung 23 an dem Gehäuse 17 angeordnet sein. Diese können alternativ oder ergänzend jedoch ebenfalls an der Seitenwand 19 des Gehäuses 17 angeordnet sein. Die Abdeckung 23 kann, wie dargestellt, Aussparungen 35 für die weiteren Wirkverbindungsmittel 34 und/oder die Stützen 37 aufweisen.

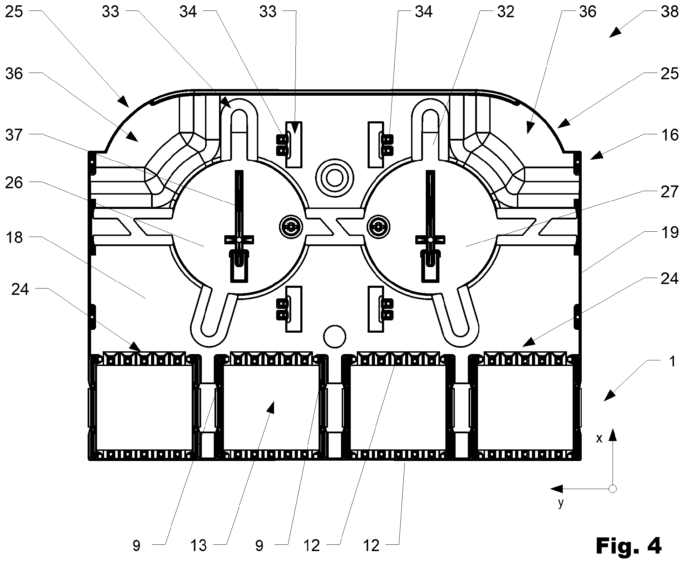

**Figur 4** zeigt den Einschub 38 gemäss Fig. 3 in einer Ansicht von oben (ohne Abdeckung 23). Wie ersichtlich ist das Gehäuse der Glasfasermanagementvorrichtung 16 (als auch das Unterteil 2 der Haltevorrichtung 1) in der zweiten Richtung hinterschnittsfrei ausgestaltet. Dies macht sich insbesondere bemerkbar an der Ausgestaltung der Laschen 32, welche je aus der zweiten Richtung betrachtet innerhalb einer Kontur einer Ausnehmung 33 in der Bodenplatte 18 angeordnet sind. Ebenfalls sind die Wirkverbindungsmittel 34 angeordnet an der Bodenplatte 18 von entsprechenden Ausnehmungen 33 umgeben um Hinterschnitte zu vermeiden. Die Wirkverbindungsmittel 34 dienen zur Montage des Einschubs 38 auf einer Hutschiene. Daher hat die Seitenwand 19 der Glasfasermanagementvorrichtung 16 und das Unterteil 2 der Haltevorrichtung 1 entsprechende gegenüberliegende Aussparungen 35 zum Aufschieben des Einschubs 38 auf einer Hutschiene (vgl. **Figur 3**).

**LISTE DER BEZUGSZEICHEN**

| | | | |
|---|---|---|---|
| 1 | Haltevorrichtung | 20 | Unteres Ende |
| 2 | Unterteil | 21 | Oberes Ende |
| 3 | Oberteil | 22 | Installationsraum |
| 4 | Klemmplatten | 23 | Abdeckung |
| 5 | Raststruktur | 24 | Eingangsbereich |
| 6 | Erstes Rastelemente | 25 | Ausgangsbereich |
| 7 | Zweites Rastelement | 26 | Erster Umlenkkörper |
| 8 | Basisplatte | 27 | Zweiter Umlenkkörper |
| 9 | Seitenteile (Unterteil) | 28 | Erster Umlenkbereich |
| 10 | Abdeckplatte | 29 | Zweiter Umlenkbereich |
| 11 | Seitenteile (Oberteil) | 30 | Erstes Ende |
| 12 | Kammartige Struktur | 31 | Zweites Ende |
| 13 | Aufnahmeraum | 32 | Laschen |
| 14 | Finger | 33 | Ausnehmungen |
| 15 | Schlitz | 34 | Wirkverbindungsmittel |
| 16 | Glasfasermanagement- | 35 | Aussparungen |
| | vorrichtung | 36 | Abgesenkter Bodenbereich |
| 17 | Gehäuse | 37 | Stütze |
| 18 | Bodenplatte | 38 | Einschub |
| 19 | Seitenwand | | |

## Patentansprüche

1. Haltevorrichtung (1) zum Halten von mindestens einer Reihe von durch die Haltevorrichtung (1) in eine erste Richtung (x) durchgeführten Glasfaserleitungen, die Haltevorrichtung (1) umfassend
a. ein Unterteil (2) zur Befestigung der Haltevorrichtung (1) an einem Netzverteilerschrank und mindestens ein mit dem Unterteil (2) wirkverbindbares Oberteil (3);
b. mindestens eine Raststruktur (5) zur Wirkverbindung des Oberteils (3) mit dem Unterteil (2) in einer zu der ersten Richtung (x) senkrechten zweiten Richtung (z) in mehreren alternativen Positionen; und
c. mindestens zwei in der zweiten Richtung (z) zwischen dem Unterteil (2) und dem Oberteil (3) angeordnete Klemmplatten (4) aus je einem weichelastischen Material zur Einklemmung der Reihe von Glasfaserleitungen zwischen den jeweiligen Klemmplatten (4).

2. Haltevorrichtung (1) gemäss Patentanspruch 1, **dadurch gekennzeichnet, dass** die mindestens eine Raststruktur (5) einen Hinterschnitt zwischen dem mindestens einen Oberteil (3) und dem Unterteil (2) in die zweite Richtung in einem wirkverbundenen Zustand des Unterteils (2) und des Oberteils (3) ausbildet.

3. Haltevorrichtung (1) gemäss Patentanspruch 2, **dadurch gekennzeichnet, dass** die mindestens eine Raststruktur (5) in dem wirkverbundenen Zustand in die erste Richtung (z) hinterschnittsfrei ausgebildet ist.

4. Haltevorrichtung (1) gemäss einem der vorangehenden Patentansprüche, **dadurch gekennzeichnet, dass** die mindestens eine Raststruktur (5) mindestens ein erstes Rastelement (6) am Unterteil (2) und mindestens ein zweites Rastelement (7) am Oberteil (3) umfasst.

5. Haltevorrichtung (1) gemäss einem der vorangehenden Patentansprüche, **dadurch gekennzeichnet, dass** das Unterteil (2) eine Basisplatte (8) und mindestens zwei von der Basisplatte (8) und zum Oberteil (3) hin abragende sich gegenüberliegende Seitenteile (9) umfasst und zwischen den jeweiligen Seitenteilen (9) ein Aufnahmeraum (13) für die mindestens zwei Klemmplatten (4) ausgebildet wird.

6. Haltevorrichtung (1) gemäss einem der vorangehenden Patentansprüche, **dadurch gekennzeichnet, dass** das mindestens eine Oberteil (3) eine Abdeckplatte (10) und zwei von der Abdeckplatte (10) und zum Unterteil (2) hin abragende sich gegenüberliegende Seitenteile (11) umfasst.

7. Haltevorrichtung (1) gemäss einem der vorangehenden Patentansprüche, **dadurch gekennzeichnet, dass** das mindestens eine Oberteil (3) aus der ersten Richtung (x) betrachtet U-förmig ausgestaltet ist.

8. Haltevorrichtung (1) gemäss einem der vorangehenden Patentansprüche, **dadurch gekennzeichnet, dass** die mindestens eine Raststruktur (5) derart ausgelegt ist, dass die Wirkverbindung zwischen dem mindestens einen Oberteil (3) und dem Unterteil (2) durch Drücken auf das Oberteil (3) in die zweite Richtung (z) und zum Unterteil (2) hin und durch Verschiebung des Oberteils (3) relativ zum Unterteil (2) in die erste Richtung auflösbar ist.

9. Haltevorrichtung (1) gemäss den Patentansprüchen 4, 5 und 6, **dadurch gekennzeichnet, dass** zwei Raststrukturen (5) vorhanden sind, sodass pro Seitenteil (9) des Unterteils (2) an den entsprechenden Seitenteilen (9) des Unterteils (2) je mindestens ein erstes Rastelement (6) und pro Seitenteil (11) des mindestens einen Oberteils (3) an den entsprechenden Seitenteilen (11) mindestens ein zweites Rastelement (7) angeordnet ist.

10. Haltevorrichtung (1) gemäss einem der vorangehenden Patentansprüche, **dadurch gekennzeichnet, dass** das Unterteil (2) mindestens eine kammartige Struktur (12) zum geordneten Durchführen mindestens einer Reihe von Glasfaserleitungen, insbesondere mehrere Reihen von Glasfaserleitungen, aufweist.

11. Haltevorrichtung (1) gemäss Patentanspruch 5 und 10, **dadurch gekennzeichnet, dass** sich die mindestens eine kammartige Struktur (12) zwischen den jeweiligen Seitenteilen (9) des Unterteils (2) in eine zur ersten Richtung (x) und zur zweiten Richtung (z) senkrechten dritten Richtung (y) erstreckt.

12. Einschub (38) für einen Verteilerschrank umfassend eine Haltevorrichtung (1) gemäss einem der vorangehenden Patentansprüche 1 bis 11.

13. Einschub (38) gemäss Patentanspruch 12, **dadurch gekennzeichnet, dass** der Einschub (38) weiterhin eine mit der Haltevorrichtung (1) verbundene Glasfasermanagementvorrichtung (16) umfasst.

14. Einschub (38) gemäss Patentanspruch 12 oder 13, **dadurch gekennzeichnet, dass** ein Gehäuse (17) der Glasfasermanagementvorrichtung (16) integral mit dem Unterteil (2) der Haltevorrichtung (1) verbunden ist.
